# EUROPÄISCHE PATENTSCHRIFT

(11) **EP 0 503 327 B1**
(45) Veröffentlichungstag und Bekanntmachung des Hinweises auf die Patenterteilung: **15.01.1997**
(21) Anmeldenummer: 92102794.2
(22) Anmeldetag: 20.02.1992
(51) Int. Cl.: G01N 27/66

(54) **Verfahren und Vorrichtung zur Messung der Konzentration von in einem Gas befindlichen Partikeln**
Method and apparatus for measuring the concentration of particles in a gas
Méthode et appareil pour la mesure de la concentration de particules dans un gaz

(30) Priorität: 13.03.1991 CH 763/91
(43) Veröffentlichungstag der Anmeldung: 16.09.1992
(73) Patentinhaber: ASEA BROWN BOVERI AG, 5401 Baden (CH)
(72) Erfinder: Byatt, John Anthony, CH-5313 Klingnau (CH); Rüegg, Walter, Dr., CH-5304 Endingen (CH)

(56) Entgegenhaltungen:
- FR-A- 2 283 492
- US-A- 4 837 440

## Beschreibung

### TECHNISCHES GEBIET

Die Erfindung bezieht sich auf das Gebiet der Umweltmesstechnik. Sie betrifft insbesondere ein Verfahren zur Messung der Konzentration von in einem Gas befindlichen Partikeln, bei welchem Verfahren das Gas mit den Partikeln in Form eines Gasstromes an einer UV-Lichtquelle vorbeigeführt, die Partikel durch die UV-Strahlung aus der UV-Lichtquelle ionisiert, die ionisierten Partikel aus dem Gasstrom ausgefiltert und der entstehende Ionenstrom gemessen werden.

Sie betrifft weiterhin eine Vorrichtung zur Messung der Konzentration von in einem Gas befindlichen Partikeln, umfassend
(a) eine rohrförmige Messkammer, durch welche das Gas mit den Partikeln in Form eines Gasstromes hindurchströmt;
(b) am Anfang der Messkammer eine UV-Lichtquelle, an welcher das Gas vorbeiströmt, wobei die im Gas befindlichen Partikel zumindest teilweise ionisiert werden;
(c) in Strömungsrichtung hinter der UV-Lichtquelle ein elektrisch leitendes Ionenfilter, welches die ionisierten Partikel aus dem Gasstrom herausfiltert und die dabei aufgenommenen elektrischen Ladungen in Form eines elektrischen Stromes an eine nachgeschaltete Messelektronik abgibt; und
(d) Mittel zur Erzeugung der Strömung des Gases durch die Messkammer;

Ein derartiges Verfahren sowie eine derartige Vorrichtung sind beispielsweise aus der US-A-4 837 440 oder einem Artikel von H. Burtscher, Bulletin SEV/VSE 80(1989)23, 2.Dezember, S.1515-1519, bekannt.

### STAND DER TECHNIK

Wegen der zunehmenden Umweltbelastung durch Schadstoffe, die z.B. durch Oelheizungen oder den Autoverkehr in die Luft abgegeben werden, werden einfache und zuverlässige Methoden und Apparate zur Messung und Ueberwachung der Luftqualität immer wichtiger.

Besondere Bedeutung kommt dabei den in der Luft schwebenden Partikeln zu, die aus folgendem Grund zur Messung der Luftqualität herangezogen werden können: Bei jeder Verbrennung von fossilen Brennstoffen werden kleinste Kohlenstoffpartikel (ϕ < 0,1 µm) erzeugt. Bei der Abkühlung des Verbrennungsgases kann auf der Oberfläche dieser Partikel ein Kondensat entstehen, welches unter anderem sogenannte polyaromatische Kohlenwasserstoffe (PAK) enthält. Die Konzentration dieser PAK ist ein gutes Mass für die Qualität der Verbrennung; sie korreliert auch gut mit anderen Schadstoffen, die bei einer schlechten Verbrennung entstehen, insbesondere mit CO. Durch Messung der PAK-Konzentration kann somit auch eine Aussage über die Qualität der Luft gemacht werden.

Eine bekannte und anerkannte Methode zur Messung der PAK-Konzentration basiert auf folgendem Prinzip: Durch Bestrahlung mit UV-Licht (Wellenlänge z.B. 185 nm) lassen sich Partikel, auf deren Oberfläche sich PAK befinden, leicht ionisieren. Pumpt man das Gas, das solche ionisierten Partikel enthält, nach Abtrennung der bei der Ionisation entstandenen Elektronen durch einen elektrisch leitenden (Ionen-)Filter, kann der Ionenstrom und damit die PAK-Partikel-Konzentration gemessen werden.

Ein Nachteil dieser bekannten Messmethode ist die Tatsache, dass zur Erzeugung des Gasstromes eine Pumpe vorgesehen ist. Eine Pumpe ist technisch aufwendig, teuer, von begrenzter Lebensdauer (Verschleiss, Verschmutzung), erzeugt Lärm und Vibrationen, und benötigt viel Platz und elektrische Leistung.

### DARSTELLUNG DER ERFINDUNG

Aufgabe der vorliegenden Erfindung ist es daher, ein Verfahren und eine Vorrichtung zur Messung der Partikelkonzentration anzugeben, welche den Einsatz mechanischer Pumpen vermeiden und damit eine einfache und zuverlässige sowie platz- und energiesparende Messung der Partikelkonzentration erlauben.

Die Aufgabe wird bei einem Verfahren der eingangs genannten Art dadurch gelöst, dass die Strömung des Gases durch Wärmekonvektion erzeugt wird.

Die erfindungsgemässe Vorrichtung zeichnet sich dadurch aus, dass
(e) die Mittel wenigstens eine Wärmequelle umfassen, welche mit dem Gas in thermischem Kontakt steht und durch Erwärmung des Gases in dem Gas eine Wärmekonvektion hervorruft.

Der Kern der Erfindung liegt darin, durch partielle Erwärmung des zu messenden Gases eine Wärmekonvektion zu erzeugen, welche das Gas durch die Messkammer strömen lässt.

Gemäss einer ersten bevorzugten Ausführungsform der Vorrichtung nach der Erfindung ist
(a) die UV-Lichtquelle von einem Strahlungsabsorber umgeben, welcher die von der UV-Lichtquelle ausgehende Strahlung zumindest teilweise absorbiert; und
(b) der Strahlungsabsorber an der Messkammer in thermischem Kontakt mit dem Gas angeordnet.

Die UV-Lichtquelle dient hierbei selbst als Quelle zur Erwärmung des Gases.

Gemäss einer zweiten bevorzugten Ausführungsform werden als Wärmequelle zumindest Teile der Messelektronik verwendet.

Weitere Ausführungsformen ergeben sich aus den Unteransprüchen.

### KURZE BESCHREIBUNG DER ZEICHNUNG

Die Erfindung soll nachfolgend anhand von Ausführungsbeispielen im Zusammenhang mit der Zeichnung näher erläutert werden. Es zeigen
- Fig. 1: ein erstes bevorzugtes Ausführungsbeispiel für eine Vorrichtung nach der Erfindung, bei welchem die Wärmekonvektion mittels einer UV-Lampe (2) und/oder einer zusätzlichen Heizung (15) erzeugt wird; und
- Fig. 2: ein zweites bevorzugtes Ausführungsbeispiel einer (miniaturisierten) Vorrichtung nach der Erfindung, bei welchem als UV-Lichtquelle eine miniaturisierte UV-Lampe (29) eingesetzt wird und die Wärmekonvektion auch durch Teile der Messelektronik (33) erzeugt wird.

### WEGE ZUR AUSFÜHRUNG DER ERFINDUNG

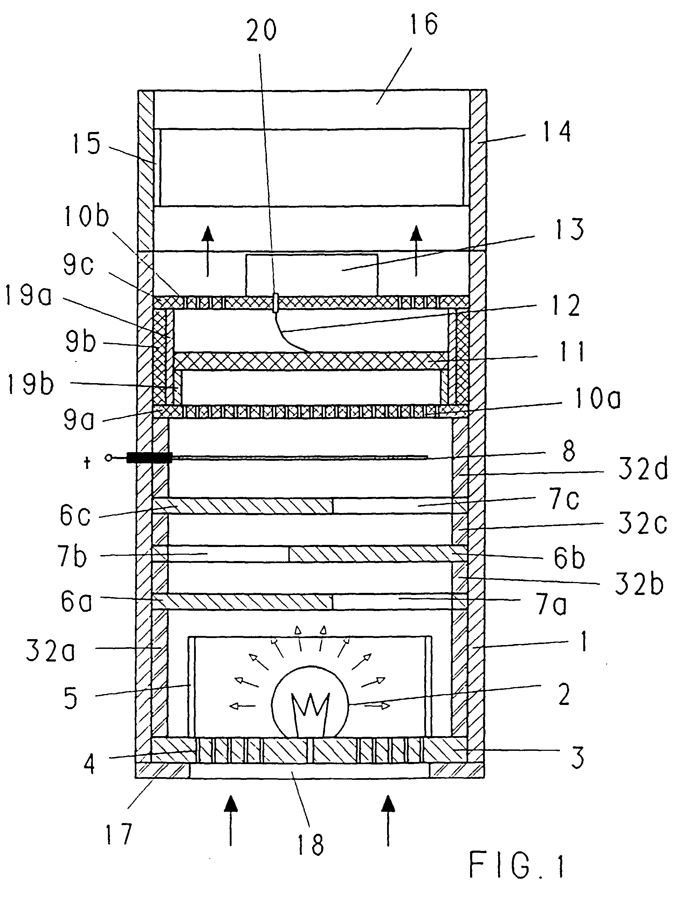

In Fig. 1 ist ein erstes bevorzugtes Ausführungsbeispiel für eine Vorrichtung nach der Erfindung dargestellt. Zentraler Bestandteil dieser Vorrichtung ist eine rohrförmige Messkammer 1, welche alle für die Messung der Partikelkonzentration wesentlichen Elemente enthält.

Am (unteren) Eingang der Messkammer 1 ist eine mit Einlassöffnungen 4 versehene Bodenplatte 3 angeordnet, welche durch einen darunterliegenden Abschlussring 17 in der Messkammer 1 gehalten wird. Der Abschlussring 17 lässt in seinem Zentrum als grosse Oeffnung einen Gaseinlass 18 frei, durch welchen das zu messende Gas mit den darin enthaltenen Partikeln über die Einlassöffnungen 4 der Bodenplatte 3 in das Innere der Messkammer 1 gelangen kann (angedeutet durch die beiden Pfeile).

Auf der Innenseite der Bodenplatte 3 ist mittig eine UV-Lampe 2 angebracht, die über einen grossen Raumwinkelbereich UV-Srahlung aussendet. Das an der UV-Lampe 2 vorbeiströmende Gas wird von der UV-Strahlung durchdrungen und die mit PAK behafteten Partikel im Gas dabei zumindest teilweise ionisiert, d.h. positiv geladen. Bei dieser Ionisation werden auch Elektronen freigesetzt.

Gas, ionisierte Partikel und Elektronen strömen hinter der UV-Lampe 2 durch ein System von mehreren UV-Blenden 6a, 6b und 6c, welche gegeneinander versetzte Blendenöffnungen 7a, 7b und 7c aufweisen und mittels entsprechender Stützringe 32a, 32b und 32c fest hintereinander angeordnet sind, in den Mittelteil der Messkammer 1. Die UV-Blenden 6a, 6b und 6c sollen dabei verhindern, dass durch die UV-Strahlung eine unerwünschte Ionisation im hinteren Teil der Messkammer 1 stattfindet.

Hinter dem System aus UV-Blenden 6a, 6b und 6c kann das Gas mit den darin enthaltenen ionisierten Partikeln und Elektronen beispielsweise an einem positiv vorgespannten Elektronenfilter 8 vorbeigeführt werden, welches die vorhandenen freien Elektronen aus dem Gasstrom herausfiltert.

Hinter dem Elektronenfilter 8 wiederum ist die eigentliche Messvorrichtung angeordnet, die aus einem elektrisch leitenden, gasdurchlässigen Ionenfilter 11 besteht. Das Ionenfilter 11 ist innerhalb eines elektrisch leitenden Faradaykäfigs mittels Isolierringen 19a und 19b isoliert aufgebaut. Der Faradaykäfig besteht aus einer leitenden Bodenplatte 9a (mit entsprechenden Einlassöffnungen 10a für den Gasstrom), einer leitenden Seitenwand 9b und einer leitenden Deckplatte 9c (mit entsprechenden Auslassöffnungen 10b für den Gasstrom). Er ist durch einen weiteren Stützring 32d von dem darunterliegenden Blendensystem (6a, 6b, 6c) beabstandet. Das Ionenfilter 11 ist über eine Kontaktfeder 12, die durch eine isolierende Durchführung 20 in der Deckplatte 9c aus dem Käfig herausgeführt ist, mit einer ausserhalb des Käfigs angebrachten Messelektronik 13 verbunden. Die Messelektronik misst den Strom, der durch die im Ionenfilter 11 hängenbleibenden, geladenen Partikel verursacht wird und ein Mass für die PAK-Konzentration ist.

Für die Funktion der Vorrichtung ist es notwendig, dass ein stetiger Gasstrom durch die Messkammer 1 geleitet wird. Bei den aus dem Stand der Technik bekannten Apparaturen wird diese Strömung durch eine Pumpe gewährleistet, welche entweder vor oder hinter der Messkammer angeordnet ist und einen entsprechenden Ueberdruck bzw. Unterdruck erzeugt.

Die vorliegende Erfindung geht hier nun einen anderen Weg: Die notwendige Gasströmung durch die Messkammer 1 wird generell durch eine Wärmekonvektion in Gang gesetzt und in Gang gehalten, welche durch lokale Erwärmung des Gases vor oder hinter der Messkammer 1 hervorgerufen wird. Für die Erwärmung können dabei wahlweise in der Vorrichtung bereits vorhandene (interne) Wärmequellen oder zusätzlich installierte (externe) Wärmequellen oder eine Kombination aus beiden eingesetzt werden. Diese verschiedenen Varianten sind in dem Ausführungsbeispiel der Fig. 1 wiedergegeben.

Eine erste Variante (interne Wärmequelle) geht davon aus, dass bei der Erzeugung des UV-Lichtes in der UV-Lampe 2 infolge des relativ schlechten Wirkungsgrades viel Wärme freigesetzt wird. Normalerweise ist diese Wärmeentwicklung eine unerwünschte Nebenerscheinung. Bei einer geschickten geometrischen Anordnung kann nun aber diese "Abfall"-Wärme bewusst dazu benutzt werden, einen Gas- bzw. Luftstrom zu erzeugen (Kamineffekt). Dazu ist es notwendig, dass die UV-Lampe 2 möglichst viel der erzeugten Wärme an den geräteinternen Gasstrom abgibt. Da die UV-Lampe 2 jedoch Wärme vor allem in Form von IR-Strahlung abgibt, muss dafür gesorgt werden, dass die IR-Strahlung von Flächen absorbiert wird, die vom zu messenden den Gas umströmt werden. Derartige Flächen sind in der Vorrichtung nach Fig. 1 als Strahlungsabsorber 5 um die UV-Lampe 2 herum angeordnet.

Während des Betriebes wärmen sich die Flächen auf, bis ein thermisches Gleichgewicht erreicht ist. In erster Näherung ist dann die Wärmeabgabe der Flächen des Strahlungsabsorbers 5 an das vorbeiströmende Gas gleich der absorbierten Strahlungsenergie. Dabei ist jede nach aussen abgegebene Wärmemenge für die Erzeugung der Gasströmung verloren. Aus diesem Grunde muss die Anordnung nach aussen möglichst geringe Wärmeverluste aufweisen, d.h. gut wärmeisoliert sein.

Das vom Strahlungsabsorber 5 erwärmte Gas dehnt sich aus und der dabei in der Anordnung entstehende Druckunterschied treibt den Gasstrom an (Kamineffekt). Die Stärke des entstehenden Gasstromes hängt vor allem von der hineingesteckten Wärmemenge, von der Geometrie der Anordnung (insbesondere Höhe und Querschnitt) und vom Strömungswiderstand ab. Da die "Kaminhöhe" einen starken Einfluss auf den Durchfluss hat (der Durchfluss ist ungefähr proportional zu H^{0,5}; H = Kaminhöhe bzw. Länge der rohrförmigen Gasführung), ist es vorteilhaft, durch Montage eines zusätzlichen, einfachen Verlängerungsrohres 14 gemäss Fig. 1 den Gasdurchfluss zu vergrössern. Der Gasauslass 16 ist dann entsprechend weiter vom Gaseinlass 18 entfernt.

Anstelle von oder zusätzlich zu der UV-Lampe 2 als interne Wärmequelle kann das Gas auch durch eine Heizung 15 als externe Wärmequelle aufgeheizt werden. Eine solche Heizung 15 (bevorzugt in Form einer elektrischen Widerstandsheizung) kann beispielsweise - wie in Fig. 1 dargestellt - im Verlängerungsrohr 14 untergebracht werden.

Denkbar ist jedoch auch die Anordnung innerhalb oder vor dem Gaseinlass 18 der Messkammer 1.

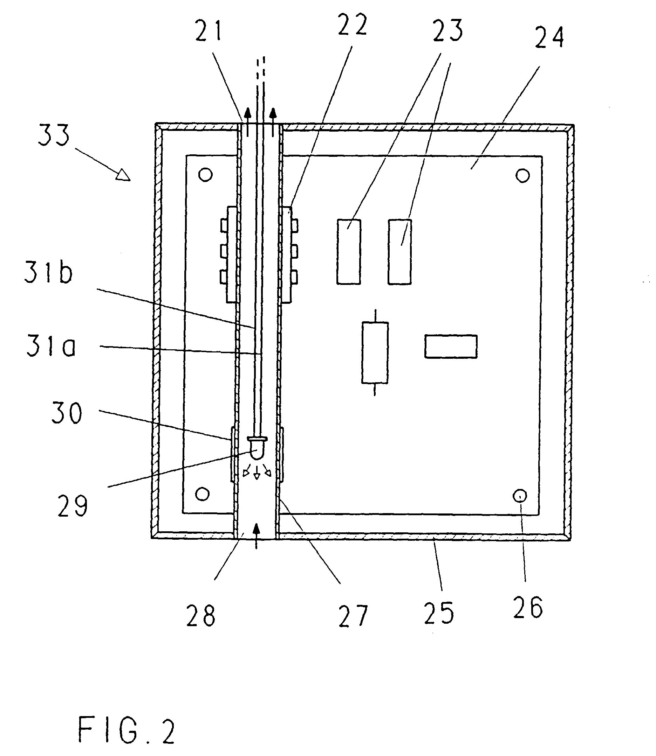

Das Ausführungsbeispiel aus Fig. 1 stellt eine Messgerät dar, dass relativ viel Platz und elektrische Versorgungsenergie beansprucht. Eine erhebliche Verkleinerung lässt sich erreichen, wenn - wie in Fig. 2 wiedergegeben - die UV-Lampe durch eine miniaturisierte UV-Lampe 29 (z.B. eine UV-emittierende Leuchtdiode), ersetzt und die Ionisierungsstrecke direkt in die Messelektronik 33 integriert wird.

Innerhalb der Messelektronik 33 sind die einzelnen Bauelemente 23 und insbesondere ein wärmeabgebendes Bauelement 22 (im dargestellten Beispiel ein IC) auf einer Schaltungsplatine 24 angeordnet, die ihrerseits mittels Platinen-Befestigungen 26 in einem Gehäuse 25 befestigt ist. Durch das Gehäuse 25 verläuft ein Glasrohr 27, dessen eines Ende einen Gaseinlass 28 und dessen anderes Ende einen Gasauslass 21 bildet.

Innerhalb des Glasrohres 27 ist als UV-Lichtquelle die miniaturisierte UV-Lampe 29 in Längsrichtung in der Nähe des Gaseinlasses 28 eingebaut. Sofern die miniaturisierte UV-Lampe 29 ihre Strahlung gerichtet abgibt, wird sie so angeordnet, dass ihre Abstrahlrichtung der Strömungsrichtung des zu messenden Gases entgegengesetzt ist. Wegen der gerichteten Abstrahlung der miniaturisierte UV-Lampe 29 kann dann auf den Einsatz von UV-Blenden verzichtet werden. Die Lampenzuleitungen 31a und 31b der miniaturisierte UV-Lampe 29 werden hinter der miniaturisierte UV-Lampe 29 in voller Länge durch das Glasrohr 27 geführt und können bei entsprechender Vorspannung direkt als Elektronenfilter eingesetzt werden. Der eigentliche Ionenfilter ist in Fig. 2 nicht dargestellt.

Auch in dieser Anordnung können wieder verschiedene Arten der Wärmezufuhr für die Wärmekonvektion des Gases vorgesehen werden. In Betracht kommt dafür einerseits ein Strahlungsabsorber 30, der in seiner Funktion dem Strahlungsabsorber 5 aus Fig. 1 entspricht und z.B. in Form einer IR-absorbierenden Schicht auf das Glasrohr 27 aufgebracht sein kann. Andererseits kann als externe Wärmequelle die elektronische Schaltung selbst, insbesondere das wärmeabgebende Bauelement 22, herangezogen werden. In diesem Fall verläuft das Glasrohr 27 - wie in Fig. 2 zu erkennen - direkt über dem wärmeabgebenden Bauelement 22 und ist an dessen Gehäuse thermisch angekoppelt.

Insgesamt lassen sich Art und Anordnung der Wärmequellen im Rahmen der Erfindung in weiten Grenzen auswählen und variieren, ohne dass der spezifische Vorteil, nämlich die platz- und energiesparende, zuverlässige Erzeugung der Gasströmung, verloren geht.

## Patentansprüche

1. Verfahren zur Messung der Konzentration von in einem Gas befindlichen Partikeln, bei welchem Verfahren das Gas mit den Partikeln in Form eines Gasstromes an einer UV-Lichtquelle vorbeigeführt, die Partikel durch die UV-Strahlung aus der UV-Lichtquelle ionisiert, die ionisierten Partikel aus dem Gasstrom ausgefiltert und der entstehende Ionenstrom gemessen werden, dadurch gekennzeichnet, dass die Strömung des Gases durch Wärmekonvektion erzeugt wird.

2. Verfahren nach Anspruch 1, dadurch gekennzeichnet, dass zur Erzeugung der Wärmekonvektion die UV-Lichtquelle selbst verwendet wird.

3. Verfahren nach einem der Ansprüche 1 und 2, dadurch gekennzeichnet, dass zur Erzeugung der Wärmekonvektion eine von der UV-Lichtquelle unabhängige Wärmequelle verwendet wird.

4. Vorrichtung zur Messung der Konzentration von in einem Gas befindlichen Partikeln, umfassend
(a) eine rohrförmige Messkammer (1), durch welche das Gas mit den Partikeln in Form eines Gasstromes hindurchströmt;
(b) am Anfang der Messkammer (1) eine UV-Lichtquelle, an welcher das Gas vorbeiströmt, wobei die im Gas befindlichen Partikel zumindest teilweise ionisiert werden;
(c) in Strömungsrichtung hinter der UV-Lichtquelle ein elektrisch leitendes Ionenfilter (11), welches die ionisierten Partikel aus dem Gasstrom herausfiltert und die dabei aufgenommenen elektrischen Ladungen in Form eines elektrischen Stromes an eine nachgeschaltete Messelektronik (13, 33) abgibt; und
(d) Mittel zur Erzeugung der Strömung des Gases durch die Messkammer (1);
dadurch gekennzeichnet, dass
(e) die Mittel wenigstens eine Wärmequelle umfassen, welche mit dem Gas in thermischem Kontakt steht und durch Erwärmung des Gases in dem Gas eine Wärmekonvektion hervorruft.

5. Vorrichtung nach Anspruch 4, dadurch gekennzeichnet, dass
(a) die UV-Lichtquelle von einem Strahlungsabsorber (5, 30) umgeben ist, welcher die von der UV-Lichtquelle ausgehende Strahlung zumindest teilweise absorbiert; und
(b) der Strahlungsabsorber (5, 30) an der Messkammer (1) in thermischem Kontakt mit dem Gas angeordnet ist.

6. Vorrichtung nach einem der Ansprüche 4 und 5, dadurch gekennzeichnet, dass als Wärmequelle eine zusätzliche Heizung (15) vorgesehen ist.

7. Vorrichtung nach einem der Ansprüche 4 und 5, dadurch gekennzeichnet, dass als Wärmequelle zumindest Teile der Messelektronik (33) verwendet werden.

8. Vorrichtung nach Anspruch 4, dadurch gekennzeichnet, dass
(a) die UV-Lichtquelle eine UV-Lampe (2) ist; und
(b) in Strömungsrichtung hinter der UV-Lampe (2) wenigstens eine UV-Blende (6a,b,c) angeordnet ist.

9. Vorrichtung nach Anspruch 4, dadurch gekennzeichnet, dass
(a) die UV-Lichtquelle eine miniaturisierte UV-Lampe (29) ist;
(b) die miniaturisierte UV-Lampe (29) mit ihrer Abstrahlrichtung entgegen der Strömungsrichtung angeordnet ist; und
(c) zumindest eine der Lampenzuleitungen (31a,b) als Elektronenfilter verwendet wird.

10. Vorrichtung nach Anspruch 4, dadurch gekennzeichnet, dass zur Verbesserung der Gasströmung an wenigstens einem Ende der Messkammer (1) ein Verlängerungsrohr (14) angebracht ist.

## Claims

1. Method for measuring the concentration of particles present in a gas, in which method the gas with the particles is guided in the form of a gas stream past a UV light source, the particles are ionized by the UV radiation from the UV light source, the ionized particles are filtered out of the gas stream and the ionic current which arises is measured, characterized in that the flow of the gas is produced by thermal convection.

2. Method according to Claim 1, characterized in that the UV light source itself is used to produce the thermal convection.

3. Method according to either of Claims 1 and 2, characterized in that a heat source independent of the UV light source is used to produce the thermal convection.

4. Device for measuring the concentration of particles present in a gas, comprising
(a) a tubular measuring chamber (1) through which the gas with the particles flows in the form of a gas stream;
(b) at the start of the measuring chamber (1) a UV light source, past which the gas flows, the particles present in the gas being at least partially ionized;
(c) downstream of the UV light source, an electrically conducting ion filter (11) which filters the ionized particles out of the gas stream and releases the electric charges picked up in the process in the form of an electric current to a downstream electronic measuring unit (13, 33); and
(d) means for producing the flow of the gas through the measuring chamber (1);
characterized in that
(e) the means comprise at least one heat source, which is in thermal contact with the gas and induces thermal convection in the gas by heating the gas.

5. Device according to Claim 4, characterized in that
(a) the UV light source is surrounded by a radiation absorber (5, 30) which at least partially absorbs the radiation emanating from the UV light source; and
(b) the radiation absorber (5, 30) is arranged on the measuring chamber (1), in thermal contact with the gas.

6. Device according to either of Claims 4 and 5, characterized in that an additional heater (15) is provided as a heat source.

7. Device according to either of Claims 4 and 5, characterized in that at least some parts of the electronic measuring unit (33) are used as a heat source.

8. Device according to Claim 4, characterized in that
(a) the UV light source is a UV lamp (2); and
(b) at least one UV screen (6a, b, c) is arranged downstream of the UV lamp (2).

9. Device according to Claim 4, characterized in that
(a) the UV light source is a miniaturized UV lamp (29);
(b) the miniaturized UV lamp (29) is arranged with its direction of radiation opposed to the direction of flow; and
(c) at least one of the lamp supply leads (31a, b) is used as an electron filter.

10. Device according to Claim 4, characterized in that an extension tube (14) is fitted at at least one end of the measuring chamber (1) in order to improve the flow of gas.

## Revendications

1. Méthode pour la mesure de la concentration de particules dans un gaz, méthode par laquelle le gaz contenant les particules est acheminé sous la forme d'un flux gazeux vers une source de lumière U.V., les particules sont ionisées par le rayonnement U.V. en provenance de la source de lumière U.V., les particules ionisées sont extraites du flux de gaz par filtrage et le courant ionique ainsi produit est mesuré, caractérisée par le fait que le courant de gaz est généré par convection thermique.

2. Méthode selon la revendication 1, caractérisée par le fait que c'est la source de lumière U.V. elle-même qui est utilisée pour produire la convection thermique.

3. Méthode selon l'une des revendications 1 et 2, caractérisée par le fait que c'est une source de chaleur indépendante de la source de lumière U.V. qui est utilisée pour produire la convection thermique.

4. Appareil pour la mesure de la concentration de particules dans un gaz, comprenant
(a) une chambre de mesure (1) tubulaire au travers de laquelle s'écoule le gaz contenant les particules sous la forme d'un flux gazeux;
(b) au début de la chambre de mesure (1), une source de lumière U.V. sur laquelle s'écoule le gaz, les particules dans le gaz étant ici au moins partiellement ionisées;
(c) dans le sens de la circulation derrière la source de lumière U.V. un filtre à ions (11) conducteur d'électricité, lequel extrait par filtrage les particules du flux de gaz et délivre les charges électriques ainsi recueillies sous la forme d'un courant électrique à un circuit électronique de mesure (13, 33) branché en aval; et
(d) des dispositifs destinés à produire la circulation du gaz au travers de la chambre de mesure (1);
caractérisé par le fait que
(e) les dispositifs comportent au moins une source de chaleur, laquelle se trouve en contact thermique avec le gaz et produit une convection thermique dans le gaz par échauffement du gaz.

5. Appareil selon la revendication 4, caractérisé par le fait que
(a) la source de lumière U.V. est entourée par un absorbeur de rayonnement (5, 30), lequel absorbe au moins partiellement le rayonnement en provenance de la source de lumière U.V.; et
(b) l'absorbeur de rayonnement (5, 30) est disposé au niveau de la chambre de mesure (1) en contact thermique avec le gaz.

6. Appareil selon l'une des revendications 4 et 5, caractérisé par le fait qu'un dispositif de chauffage supplémentaire (15) est prévu comme source de chaleur.

7. Appareil selon l'une des revendications 4 et 5, caractérisé par le fait qu'au moins une partie du circuit électronique de mesure (33) est utilisée comme source de chaleur.

8. Appareil selon la revendication 4, caractérisé par le fait que
(a) la source de lumière U.V. est une lampe à U.V. (2); et
(b) au moins un obturateur à U.V. (6a, b, c) est disposé dans le sens du courant derrière la lampe à U.V. (2).

9. Appareil selon la revendication 4, caractérisé par le fait que
(a) la source de lumière U.V. est une lampe à U.V. miniaturisée (29);
(b) la lampe à U.V. miniaturisée (29) est disposée avec son sens de rayonnement opposé au sens du courant; et
(c) au moins l'un des câbles de la lampe (31a, b) est utilisé comme filtre à électrons.

10. Appareil selon la revendication 4, caractérisé par le fait qu'un tube prolongateur (14) est installé au moins à une extrémité de la chambre de mesure (1) pour améliorer la circulation du gaz.
